# EUROPÄISCHE PATENTSCHRIFT

(11) **EP 1 644 633 B1**
(45) Veröffentlichungstag und Bekanntmachung des Hinweises auf die Patenterteilung: **14.10.2009**
(21) Anmeldenummer: 04730818.4
(22) Anmeldetag: 03.05.2004
(51) Int. Cl.: F02M 55/00, F02M 59/46, F02M 63/02, F16K 17/196, F16K 15/18

(54) **DRUCKHALTEVENTIL, WERKZEUG, SET UND KRAFTSTOFFEINSPRITZSYSTEM**
PRESSURE MAINTAINING VALVE, TOOL, SET AND FUEL INJECTION SYSTEM
SOUPAPE DE MAINTIEN DE PRESSION, OUTIL, ENSEMBLE ET SYSTEME D'INJECTION DE CARBURANT

(30) Priorität: 04.07.2003 DE 10330132
(43) Veröffentlichungstag der Anmeldung: 12.04.2006
(73) Patentinhaber: ROBERT BOSCH GMBH, 70442 Stuttgart (DE)
(72) Erfinder: BREKLE, Hans, 71729 Erdmannhausen (DE)
(86) Internationale Anmeldenummer: PCT/DE2004/000930
(87) Internationale Veröffentlichungsnummer: WO 2005/010345

(56) Entgegenhaltungen:
- DE-A- 10 139 871
- DE-A- 10 339 250
- US-B1- 6 168 133

## Beschreibung

Die Erfindung betrifft ein Druckhalteventil für ein Kraftstoffeinspritzsystem, das einen Hochdruckbereich und einen Niederdruckbereich umfasst, mit einem Ventilgehäuse, das einen ersten Anschluss, der mit dem Niederdruckbereich verbindbar ist, und einen zweiten Anschluss aufweist, der mit dem Rücklauf einer Kraftstoffeinspritzventileinrichtung verbindbar ist, wobei in dem Ventilgehäuse ein Ventiltopf hin und her bewegbar aufgenommen ist, der gegen die Vorspannkraft einer ersten Federeinrichtung vorgespannt ist, und der eine Durchgangsöffnung aufweist, die durch ein Schließelement verschließbar ist, das gegen die Vorspannkraft einer zweiten Federeinrichtung vorgespannt ist, um einen Mindestdruck in dem Rücklauf aufrechtzuerhalten. Die Erfindung betrifft auch ein Werkzeug zum Abbauen des Drucks in einem vorab beschriebenen Druckhalteventil. Die Erfindung betrifft auch ein Set mit einem vorab beschriebenen Druckhalteventil und einem vorab beschriebenen Werkzeug. Die Erfindung betrifft auch ein Kraftstoffeinspritzsystem, das einen Niederdruckbereich und einen Hochdruckbereich umfasst, aus dem eine Kraftstoffeinspritzventileinrichtung gespeist wird, die über einen Rücklauf mit dem Niederdruckbereich verbunden ist.

### Stand der Technik

In herkömmlichen Kraftstoffeinspritzsystemen können Piezoaktoren verwendet werden, um eine definierte Einspritzung von Kraftstoff zu gewährleisten. Ein solcher Piezoaktor kann über eine hydraulische Kopplungsreinrichtung mit einem Steuerventilglied gekoppelt sein. Um eine Befüllung der Kopplungseinrichtung sicherzustellen, kann in dem Kraftstoffeinspritzsystem im Rücklauf der Kraftstoffeinspritzventileinrichtung ein Mindestdruck aufrechterhalten werden und zwar auch nach Abschalten des Systems beziehungsweise einer zugehörigen Brennkraftmaschine. Dieser Mindestdruck kann durch ein Druckhalteventil im Rücklauf der Kraftstoffeinspritzventiteinrichtung aufrechterhalten werden. Der durch das Druckhalteventil aufrechtzuerhaltende Mindestdruck kann bei Montage- und/oder Wartungsarbeiten am Kraftstoffeinspritzsystem zu einem unkontrollierten Verspritzen von Kraftstoff führen.

Aus der DE 101 39 871 A ist eine Druck halteventil bekannt. Aufgabe der Erfindung ist es, ein Druckhalteventil, ein Werkzeug, ein Set und/oder ein Kraftstoffeinspritzsystem anzugeben, welche es auf einfache Art und Weise ermöglichen, den durch das Druckhalteventil aufrechtzuerhaltenden Mindestdruck gezielt abzubauen.

### Vorteile der Erfindung

Die Aufgabe ist bei einem Druckhalteventil für ein Kraftstoffeinspritzsystem, das einen Hochdruckbereich und einen Niederdruckbereich umfasst, mit einem Ventilgehäuse, das einen ersten Anschluss, der mit dem Niederdruckbereich verbindbar ist, und einen zweiten Anschluss aufweist, der mit dem Rücklauf einer Kraftstoffeinspritzventileinrichtung verbindbar ist, wobei in dem Ventilgehäuse ein Ventiltopf hin und her bewegbar aufgenommen ist, der gegen die Vorspannkraft einer ersten Federeinrichtung vorgespannt ist und der eine Durchgangsöffnung aufweist, die durch ein Schließelement verschließbar ist, das gegen die Vorspannkraft einer zweiten Federeinrichtung vorgespannt ist, um, einen Mindestdruck im Rücklauf aufrechtzuerhalten, dadurch gelöst, dass in dem Ventilgehäuse zwischen dem ersten Anschluss und dem Ventiltopf eine Entlastungseinrichtung angeordnet ist, die von außen betätigbar ist. Durch die Entlastungseinrichtung kann der Druck in dem Rücklauf mit Hilfe eines Werkzeugs gezielt abgebaut werden. Dadurch wird ein unerwünschtes Verspritzen des Kraftstoffs sicher verhindert. Bei den Federeinrichtungen handelt es sich vorzugsweise um Schraubendruckfedern, die sich an entgegengesetzten Enden des Ventilgehäuses abstützen.

Ein bevorzugtes Ausführungsbeispiel des Druckhalteventils ist **dadurch gekennzeichnet, dass** die Entlastungseinrichtung einen Druckbolzen umfasst, der von dem ersten Anschluss zu dem Ventiltopf hin ragt. Der Druckbolzen dient dazu, den Abstand zwischen dem ersten Anschluss und dem Ventiltopf zu überbrücken. Es ist allerdings nicht nötig, dass sich der Druckbolzen an dem Ventiltopf in Anlage befindet.

Ein weiteres bevorzugtes Ausführungsbeispiel des Druckhalteventils ist dadurch gekennzeichnet, dass der Druckbolzen von einer Positionierscheibe ausgeht, die zwischen der zweiten Federeinrichtung und dem Ventilgehäuse eingespannt ist. Die Positionierscheibe dient dazu, den Druckbolzen in dem Ventilgehäuse zu positionieren.

Ein weiteres bevorzugtes Ausführungsbeispiel des Druckhalteventils ist **dadurch gekennzeichnet, dass** zwischen der Positionierscheibe und dem Ventilgehäuse eine Fixierscheibe angeordnet ist, die dazu dient, ein Filterelement zwischen der Positionierscheibe und der Fixierscheibe zu fixieren. Der zum Fixieren des Filterelements zwischen den beiden Scheiben notwendige Anpressdruck wird durch die zweite Federeinrichtung gewährleistet, durch welche die Fixierscheibe, das Filterelement und die Positionierscheibe gegen das Ventilgehäuse gedrückt werden. Die daraus resultierende Einspannung verhindert ein unerwünschtes Verrutschen des Filterelements.

Ein weiteres bevorzugtes Ausführungsbeispiel des Druckhalteventils ist **dadurch gekennzeichnet, dass** in der Fixierscheibe und in der Positionierscheibe Durchgangslöcher vorgesehen sind. Die Durchgangslöcher ermöglichen den Durchtritt von Kraftstoff von dem ersten Anschluss zu den Ventiltopf und in umgekehrter Richtung.

Ein weiteres bevorzugtes Ausführungsbeispiel des Druckhalteventils ist **dadurch gekennzeichnet, dass** die Durchgangslöcher in der Fixierscheibe und in der Positionierscheibe so ausgebildet und angeordnet sind, dass ein Durchtritt von Kraftstoff durch die Fixierscheibe und die Positionierscheibe unabhängig von einer relativen Verdrehung der beiden Scheiben zueinander gewährleistet ist. Durch eine geeignete Größe, Anzahl und Position der Durchgangslöcher in den Scheiben wird die Montage des Druckhalteventils vereinfacht. Die beiden Scheiben können in einem beliebigen Winkel zueinander verdreht werden, ohne dass ein Durchtritt von Kraftstoff verhindert wird.

Ein weiteres bevorzugtes Ausführungsbeispiel des Druckhalteventils ist **dadurch gekennzeichnet, dass** die Fixierscheibe auf der der Positionierscheibe abgewandten Seite radial außen einen Ringwulst aufweist. Der Ringwulst hat die Funktion eines Distanzelements und gewährleistet, dass die Fixierscheibe nicht unmittelbar auf der Öffnung des ersten Anschlusses aufliegt. Dadurch wird sichergestellt, dass der Durchfluss von Kraftstoff vom ersten Anschluss zum Ventiltopf und umgekehrt nicht durch die Fixierscheibe selbst behindert wird.

Bei einem Werkzeug zum Abbauen des Drucks in einem vorab beschriebenen Druckhalteventil ist die oben angegebene Aufgabe dadurch gelöst, dass das Werkzeug einen becherförmigen Grundkörper mit einem Boden aufweist, von dem eine im Wesentlichen kreiszylindermantelförmige Umfangswand ausgeht, deren Innendurchmesser etwas größer als der äußere Umfang des Druckhalteventils im Bereich des ersten Anschlusses ist. Das Werkzeug wird beim Ablassen des Kraftstoffs aus dem Ventilgehäuse so über den ersten Anschluss gestülpt, dass die Mantelfläche des Bechers das Ventilgehäuse teilweise umgibt, um den austretenden Kraftstoff aufzufangen.

Ein bevorzugtes Ausführungsbeispiel des Werkzeugs ist **dadurch gekennzeichnet, dass** sich im Inneren des Werkzeugs von dem Boden in Richtung der Werkzeugachse ein Dorn erstreckt, dessen Außendurchmesser etwas kleiner als der Innendurchmesser des ersten Anschlusses ist und dessen Länge größer als die Länge des ersten Anschlusses ist. Der vorzugsweise in Richtung der Ventilgehäuselängsachse angeordnete Dorn kann durch den ersten Anschluss, der vorzugsweise als Anschlussstutzen ausgebildet ist, in das Innere des Ventilgehäuses eingeführt werden, bis er an der Fixierscheibe zur Anlage kommt. Wenn der Dorn weiter in das Innere des Ventilgehäuses eingeführt wird, führt das dazu, dass die Fixierscheibe, die Positionierscheibe und der Druckbolzen gegen die Wirkung der Vorspannkraft der zweiten Federeinrichtung von dem Ventilgehäuse abheben. Wenn der Dorn noch weiter in das Innere des Ventilgehäuses eingeführt wird, kommt der Druckbolzen an dem Ventiltopf oder an dem Schließelement zur Anlage. Beim weiteren Einführen des Dorns in das Ventilgehäuse wird der Ventiltopf von seinem Sitz abgehoben, wodurch der an den zweiten Anschluss angeschlossene Rücklauf zum ersten Anschluss hin entlastet wird. Der aus dem ersten Anschluss austretende mit Druck beaufschlagte Kraftstoff wird im Inneren des Werkzeugs aufgefangen.

Die oben angegebene Aufgabe wird auch durch ein Set mit einem vorab beschriebenen Druckhalteventil und einem vorab beschriebenen Werkzeug gelöst. Wenn der Druck in der Rücklaufleitung abgebaut werden soll, wird die mit dem ersten Anschluss verbundene Anschlussleitung entfernt und der Dorn in den ersten Anschluss eingeführt, bis der Ventiltopf von seinen Sitz abhebt. Der daraufhin aus dem ersten Anschluss austretende Kraftstoff wird in dem Werkzeug aufgefangen.

Bei einem Kraftstoffeinspritzsystem, das einen Niederdruckbereich und einen Hochdruckbereich umfasst, aus dem eine Kraftstoffeinspritzventileinrichtung gespeist wird, die über einen Rücklauf mit dem Niederdruckbereich verbunden ist, ist die oben angegebene Aufgabe dadurch gelöst, dass ein vorab beschriebenes Druckhalteventil an den Rücklauf der Kraftstoffeinspritzventileinrichtung und an den Niederdruckbereich angeschlossen ist.

### Zeichnung

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Es zeigen:

- Figur 1: eine schematische Darstellung eines Kraftstoffeinspritzsystems mit einem Druckhalteventil;
- Figur 2: eine perspektivische Darstellung eines Schnitts durch ein Druckhalteventil mit einer Fixierscheibe und einer Positionierscheibe;
- Figur 3: die Fixierscheibe aus dem in Figur 2 dargestellten Druckhalteventil in der Draufsicht;
- Figur 4: die Darstellung eines Schnitts entlang der Linie IV - IV in Figur 3;
- Figur 5: die Positionierscheibe aus dem in Figur 2 dargestellten Druckhalteventil in der Draufsicht;
- Figur 6: die Ansicht eines Schnitts entlang der Linie VI - VI in Figur 5 und
- Figur 7: ein Werkzeug zum Entlasten des in Figur 2 dargestellten Druckhalteventils im Längsschnitt.

### Beschreibung der Ausführungsbeispiele

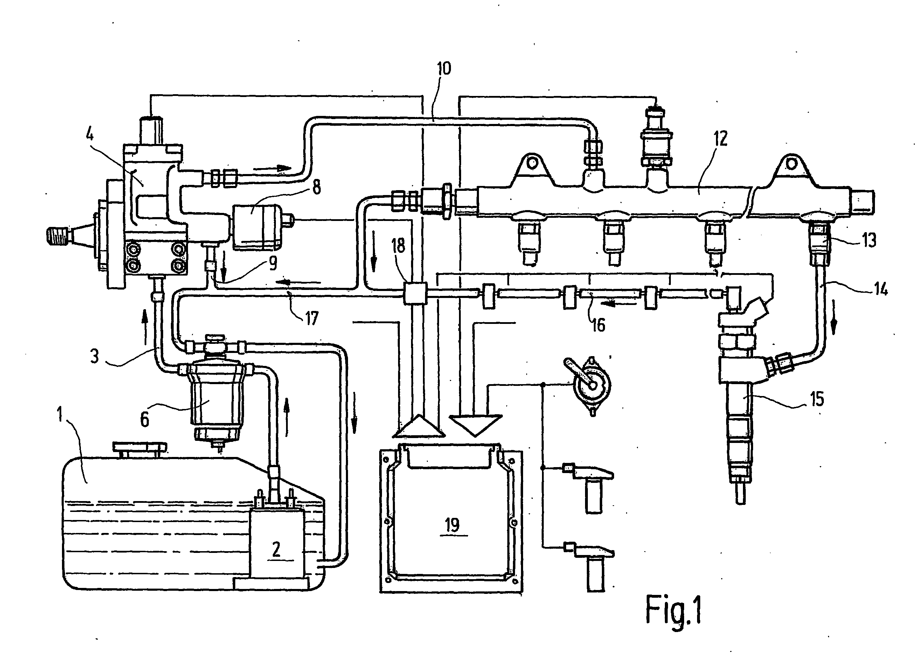

In Figur 1 ist ein Common Rail Kraftstoffeinspritzsystem schematisch dargestellt. Aus einem Niederdruckbehälter 1, der auch als Kraftstofftank bezeichnet werden kann, wird mit Hilfe einer Kraftstoffförderpumpe 2 über eine Verbindungsleitung 3 Kraftstoff zu einer Hochdruckpumpe 4 gefördert. In der Verbindungsleitung 3 ist ein Überströmventil 6 angeordnet. Der Niederdruckbehälter 1, die Kraftstoffförderpumpe 2 und die Verbindungsleitung 3 sind mit Niederdruck beaufschlagt und werden deshalb dem Niederdruckbereich zugeordnet.

An der Hochdruckpumpe 4 ist ein Druckregelventil 8 angebracht, das über eine Leitung 9 an den Niederdruckbehälter 1 anschlossen ist. Außerdem geht von der Hochdruckpumpe 4 eine Hochdruckleitung 10 aus, die den mit Hochdruck beaufschlagten Kraftstoff zu einem Hochdruckspeicher 12 liefert, der auch als Common Rail bezeichnet wird. Von dem Hochdruckspeicher 12 gehen unter Zwischenschaltung von Durchflussbegrenzern 13 Hochdruckleitungen 14 aus, die den mit Hochdruck beaufschlagten Kraftstoff aus dem Hochdruckspeicher 12 zu Einspritzventilen 15 liefern, die auch als Injektoren bezeichnet werden und von denen in Figur 1 aus Gründen der Übersichtlichkeit nur eins dargestellt ist. Die Hochdruckleitung 10, der Hochdruckspeicher 12, die Hochdruckleitung 14 und das Einspritzventil 15 enthalten mit Hochdruck beaufschlagten Kraftstoff und werden demzufolge dem Hochdruckbereich des Kraftstoffeinspritzsystems zugeordnet.

Von dem Kraftstoffeinspritzventil 15 führt eine Rücklaufleitung, die zwei Abschnitte 16 und 17 aufweist, zu dem Niederdruckbehälter 1. Zwischen die beiden Abschnitte 16 und 17 der Rücklaufleitung ist ein Druckhalteventil 18 geschaltet. Das Druckhalteventil 18 dient dazu, in dem Abschnitt 16 der Rücklaufleitung einen Mindestdruck von etwa 10 bar aufrechtzuerhalten, der unabhängig vom Betriebszustand des Kraftstoffeinspritzsystems ein Befüllen eines Kopplungsraums zwischen einem Piezoaktor und einem Steuerventilglied in dem Kraftstoffeinspritzventil 15 ermöglicht. Der Aufbau und die Funktion des Druckhalteventils 18 werden im Folgenden erläutert. Der Betrieb des Kraftstoffeinspritzsystems wird durch ein elektronisches Steuergerät 19 gesteuert.

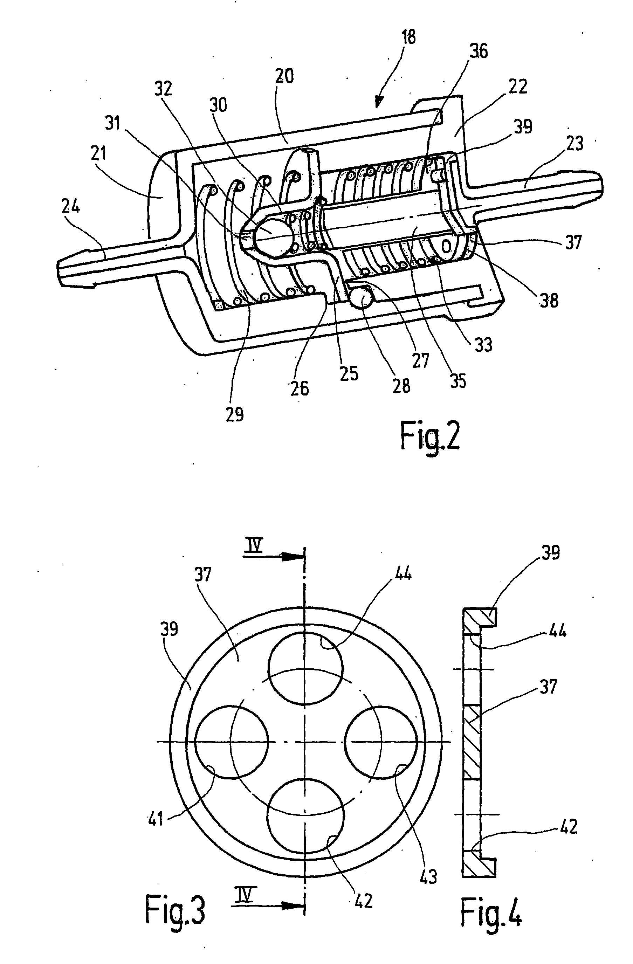

In Figur 2 ist das Druckhalteventil 18 aus Figur 1 in einer perspektivischen Schnittdarstellung gezeigt. Das in Figur 2 darstellte Druckhalteventil 18 weist ein becherförmiges Ventilgehäuse 20 mit einem Boden 21 und einem Deckel 22 auf. Von dem Deckel 22 erstreckt sich ein erster Anschlussstutzen 23 nach außen. Von dem Boden 21 erstreckt sich ein zweiter Anschlussstutzen 24 ebenfalls nach außen. An den ersten Anschlussstutzen 23 wird der Abschnitt 17 der Rücklaufleitung (in Figur 1 dargestellt) angeschlossen. An den zweiten Anschlussstutzen 24 wird der Abschnitt 16 der Rücklaufleitung (in Figur 1 dargestellt) angeschlossen.

In dem Ventilgehäuse 20 bis 22, das eine im Wesentlichen kreiszylinderförmige Gestalt aufweist, ist ein Ventiltopf 25 zwischen zwei Anschlägen 26 und 27 hin und her bewegbar aufgenommen. Der Anschlag 26 ist an dem becherförmigen Ventilgehäuseteil 20 und der Anschlag 27 an dem Ventilgehäusedeckel 22 ausgebildet. Der Ventiltopf 25 weist einen im Wesentlichen kreisscheibenförmigen Grundkörper auf, der radial außen an einem O-Ring 28 anliegt, der teilweise in einer entsprechenden Nut zwischen einem rohrförmigen Ansatz des Gehäusedeckels 22 und dem Ventilgehäuseteil 20 aufgenommen ist. Der scheibenförmige Grundkörper des Ventiltopfs 25 wird mit Hilfe einer ersten Federeinrichtung 29 in dichtender Anlage an dem O-Ring 28 gehalten. Bei der ersten Federeinrichtung 29 handelt es sich um eine vorgespannte Schraubendruckfeder.

Der im Wesentlichen kreisscheibenförmige Grundkörper des Ventiltopfs 25 weist eine zentrale Öffnung auf, von der ein rohrförmiger Ansatz 30 ausgeht, an deren Ende eine Öffnung 31 ausgebildet ist. In dem rohrförmigen Ansatz 30 ist eine Ventilkugel 32 aufgenommen, die durch eine zweite Federeinrichtung 33 gegen die Öffnung 31 am Ende des rohrförmigen Ansatzes 30 in Anlage gehalten wird. Bei der zweiten Federeinrichtung 33 handelt es sich um eine vorgespannte Schraubendruckfeder.

Die durch die zweite Federeinrichtung 33 vorgespannte Ventilkugel 32 gibt die Öffnung 31 frei, wenn der Druck in dem Abschnitt 16 der Rücklaufleitung (siehe Figur 1) einen vorgegebenen Wert überschreitet. Dadurch wird gewährleistet, dass ein eventuell in dem Abschnitt 16 der Rücklaufleitung vorhandener, unerwünschter Überdruck abgebaut wird.

In der Nähe des Ventiltopfs 25 ist ein Ende eines Druckbolzens 35 angeordnet, dessen anderes Ende einstückig mit einer Positionierscheibe 36 verbunden ist. Die Positionierscheibe 36 wirkt mit einer Fixierscheibe 37 zusammen, um ein Filterblatt 38 zu fixieren. Die Positionierscheibe 36, die Fixierscheibe 37 und das dazwischen angeordnete Fixierblatt 38 werden durch die zweite Federeinrichtung 33 an der Innenseite des Ventilgehäusedeckels 22 in Anlage gehalten. Auf der der Positionierscheibe 36 abgewandten Seite der Fixierscheibe 37 ist radial außen ein Ringwulst 39 ausgebildet, der an der Innenseite des Ventilgehäusedeckels 22 anliegt. Dadurch wird ein Abstand zwischen der Fixierscheibe 37 und dem Ventilgehäusedeckel 22 geschaffen, der den Durchtritt von Kraftstoff aus und zu dem Anschlussstutzen 23 gewährleistet.

In den Figuren 3 und 4 sieht man, dass in der Fixierscheibe 37 vier Durchgangsöffnungen 41 bis 44 ausgespart sind, die den Durchtritt von Kraftstoff gewährleisten.

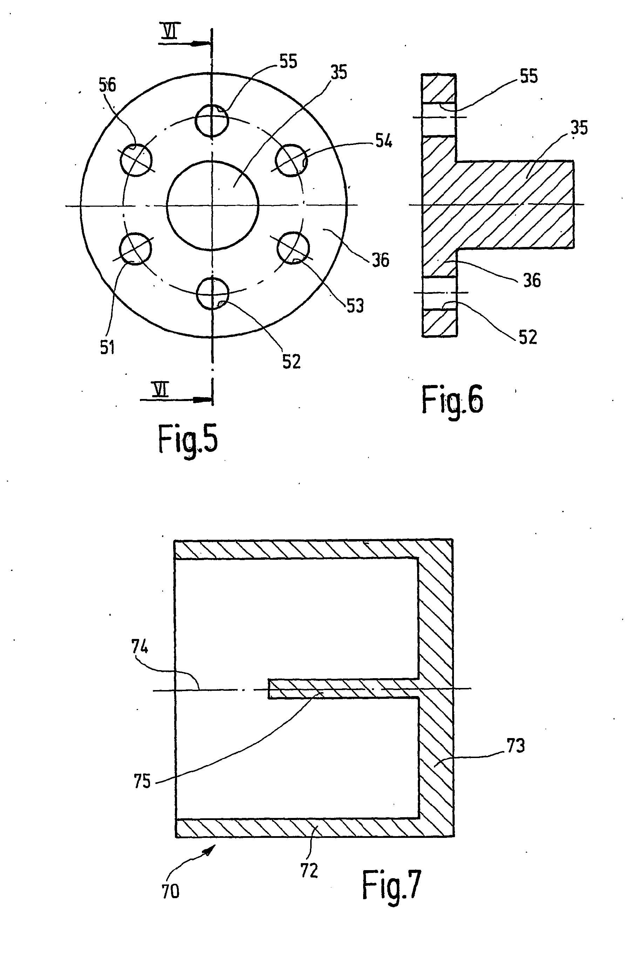

In den Figuren 5 und 6 sieht man, dass in der Positionierscheibe 36 sechs Durchgangsöffnungen 51 bis 56 ausgespart sind, die ebenfalls den Durchtritt von Kraftstoff gewährleisten. Die Durchgangsöffnungen 41 bis 44 und 51 bis 56 in den beiden Scheiben 37 und 36 sind so ausgebildet und angeordnet, dass, unabhängig vom Verdrehwinkel der beiden Scheiben zueinander, immer mindestens zwei Durchgangsöffnungen der beiden Scheiben zumindest teilweise übereinander liegen beziehungsweise sich überdecken. Dadurch wird, unabhängig von der Einbaulage der Scheiben, immer der Durchtritt von Kraftstoff gewährleistet.

In Figur 7 ist ein Werkzeug 70 im Längsschnitt dargestellt, das einen im Wesentlichen kreiszylindermantelförmigen Grundkörper 72 aufweist, der auf einer Seite durch einen Boden 73 geschlossen ist. Das Werkzeug 70 weist demzufolge eine becherförmige Gestalt mit einer Werkzeuglängsachse 74 auf. Im Inneren des becherförmigen Werkzeugs geht von dem Boden 73 ein Dorn 75 aus, der sich in Richtung der Werkzeuglängsachse 74 erstreckt. Die Länge des Dorns 75 ist kleiner als die Ausdehnung des im Wesentlichen kreiszylindermantelförmigen Grundkörpers 72 in Richtung der Werkzeuglängsachse 74. Der Dorn 75 ragt also nicht aus dem Werkzeug 70 heraus.

Im eingebauten Zustand des Druckhalteventils 18 ist an den Anschlussstutzen 24 der Abschnitt 16 der Rücklaufleitung (in Figur 1) und an den Anschlussstutzen 23 der Abschnitt 17 der Rücklaufleitung (in Figur .1) angeschlossen. Der Druck in dem Abschnitt 16 der Rücklaufleitung beträgt zum Beispiel etwa 10 bar. Wenn dieser Druck zu Wartungs- und/oder Montagearbeiten abgebaut werden soll, wird der Abschnitt 17 der Rücklaufleitung, der mit Niederdruckbeaufschlagt beziehungsweise drucklos ist, von dem Anschlussstutzen 23 entfernt. Der Ventiltopf 25 befindet sich aufgrund der Beaufschlagung durch die erste Federeinrichtung 29 und aufgrund der Beaufschlagung durch den in dem Abschnitt 16 der Rücklaufleitung herrschenden Drucks in Anlage an dem O-Ring 28. Außerdem befindet sich die Ventilkugel 32 aufgrund ihrer Beaufschlagung durch die zweite Federeinrichtung 33 in Anlage an der Öffnung 31 des Ventiltopfs 25. Der Druck in dem Abschnitt 16 der Rücklaufleitung und in dem damit in Verbindung stehenden Ventilgehäuseinnenraum zwischen dem Boden 21 und dem Ventiltopf 25 wird also auch dann aufrechterhalten, wenn der erste Anschlussstutzen 23 zur Umgebung hin offen ist.

Um eine Druckentlastung des Abschnitts 16 der Rücklaufleitung und des Druckhalteventilinnenraums zwischen dem Boden 21 und dem Ventiltopf 25 zu erreichen, wird der Dorn 75 des Werkzeugs 70 in den ersten Anschlussstutzen 23 eingeführt, bis das freie Ende des Dorns 75 an der Fixierscheibe 37 zur Anlage kommt. Daraufhin wird der Dorn 75 weiter in das Ventilgehäuse 20 hineinbewegt, wodurch die Fixierscheibe 37, die Positionierscheibe 36 und der Druckbolzen 35 auf den Ventiltopf 25 zubewegt werden, bis der Druckbolzen 35 an dem Ventiltopf 25 oder der Ventilkugel 32 zur Anlage kommt. Wenn der Druckbolzen 75 noch weiter in der gleichen Richtung, also zu dem zweiten Anschlussstutzen 24 hinbewegt wird, dann hebt der Ventiltopf 25 von dem O-Ring 28 ab und der in dem Ventilgehäuse zwischen dem Ventiltopf 25 und dem Boden 21 enthaltene Kraftstoff kann an dem Ventiltopf 25 vorbei durch den ersten Anschlussstutzen 23 in das becherförmige Werkzeug 70 entweichen. In diesem Zustand befindet sich der von dem Boden 73 abgewandte Umfangsrand des Werkzeugs 70 mit einer ausreichenden Überlappungslänge im Bereich des Ventilgehäusedeckels 22, so dass ein unerwünschtes Austreten des druckbeaufschlagten Kraftstoffs aus dem becherförmigen Werkzeug 70 sicher verhindert wird:

Durch die Erfindung wird ermöglicht, den Druck in dem Abschnitt 16 der Rücklaufleitung innerhalb von Sekunden ohne unkontrolliertes Verspritzen von Kraftstoff gezielt abzubauen. Die Funktion des Druckhalteventils bleibt erhalten. Dadurch können Verletzungen des Servicepersonals durch unkontrolliertes Verspritzen von heißem Kraftstoff beim Öffnen des Rücklauf Rails verhindert werden. Außerdem wird verhindert, das austretender Kraftstoff auf heiße Motorteile oder heiße Auspuffteile gelangt.

## Patentansprüche

1. Druckhalteventil für ein Kraftstoffeinspritzsystem, das einen Hochdruckbereich und einen Niederdruckbereich umfasst, mit einem Ventilgehäuse (20) das einen ersten Anschluss (23), der mit dem Niederdruckbereich verbindbar ist, und einen zweiten Anschluss (24) aufweist, der mit dem Rücklauf (16) einer Kraftstoffeinspritzventileinrichtung (15) verbindbar ist, wobei in dem Ventilgehäuse (20) ein Ventiltopf (25) hin und her bewegbar aufgenommen ist, der gegen die Vorspannkraft einer ersten Federeinrichtung (29) vorgespannt ist und der eine Durchgangsöffnung (31) aufweist, die durch ein Schließelement (32) verschließbar ist, das gegen die Vorspannkraft einer zweiten Federeinrichtung (33) vorgespannt ist, um einen Mindestdruck im Rücklauf (16) aufrechtzuerhalten, **dadurch gekennzeichnet, dass** in dem Ventilgehäuse (20) zwischen dem ersten Anschluss (23) und dem Ventiltopf (25) eine Entlastungseinrichtung (35, 36, 37) angeordnet ist, die von außen betätigbar ist.

2. Druckhalteventil nach Anspruch 1, **dadurch gekennzeichnet, dass** die Entlastungseinrichtung einen Druckbolzen (35) umfasst, der von dem ersten Anschluss (23) zu dem Ventiltopf (25) hin ragt.

3. Druckhalteventil nach Anspruch 2, **dadurch gekennzeichnet, dass** der Druckbolzen (35) von einer Positionierscheibe (36) ausgeht, die zwischen der zweiten Federeinrichtung (33) und dem Ventilgehäuse (22) eingespannt ist.

4. Druckhalteventil nach Anspruch 3, **dadurch gekennzeichnet, dass** zwischen der Positionierscheibe (36) und dem Ventilgehäuse (22) eine Fixierscheibe (37) angeordnet ist, die dazu dient, ein Filterelement (38) zwischen der Positionierscheibe (36) und der Fixierscheibe (37) zu fixieren.

5. Druckhalteventil nach Anspruch 4, **dadurch gekennzeichnet, dass** in der Fixierscheibe (37) und in der Positionierscheibe (36) Durchgangslöcher (41 bis 44; 51 bis 56) vorgesehen sind.

6. Druckhalteventil nach Anspruch 5, **dadurch gekennzeichnet, dass** die Durchgangslöcher (41 bis 44; 51 bis 56) in der Fixierscheibe (37) und in der Positionierscheibe (36) so ausgebildet und angeordnet sind, dass ein Durchtritt von Kraftstoff durch die Fixierscheibe (37) und durch die Positionierscheibe (36) unabhängig von einer relativen Verdrehung der beiden Scheiben zueinander gewährleistet ist.

7. Druckhalteventil nach einem der Ansprüche 4 bis 6, **dadurch gekennzeichnet, dass** die Fixierscheibe (37) auf der der Positionierscheibe (36) abgewandten Seite radial außen einen Ringwulst (39) aufweist.

8. Werkzeug zum Abbauen des Drucks in einem Druckhalteventil (18) nach einem der vorhergehenden Ansprüche, **dadurch gekennzeichnet, dass** das Werkzeug (70) einen becherförmigen Grundkörper (72) mit einem Boden (73) aufweist, von dem eine im Wesentlichen kreiszylindermantelförmige Umfangswand ausgeht, deren Innendurchmesser etwas größer als der äußere Umfang des Druckhalteventils (18) im Bereich des ersten Anschlusses (23) ist.

9. Werkzeug nach Anspruch 8, **dadurch gekennzeichnet, dass** sich im Inneren des Werkzeugs (70) von dem Boden (73) in Richtung der Werkzeuglängsachse (74) ein Dorn (75) erstreckt, dessen Außendurchmesser etwas kleiner als der Innendurchmesser des ersten Anschlusses (23) ist und dessen Länge größer als die Länge des ersten Anschlusses ist.

10. Set mit einem Druckhalteventil (18) nach einem der Ansprüche 1 bis 7 und einem Werkzeug (70) nach einem der Ansprüche 8 bis 9.

11. Kraftstoffeinspritzsystem, das einen Niederdruckbereich und einen Hochdruckbereich umfasst, aus dem eine Kraftstoffeinspritzventileinrichtung (15) gespeist wird, die über einen Rücklauf (16) mit dem Niederdruckbereich verbunden ist, **dadurch gekennzeichnet, dass** ein Druckhalteventil (18) nach einem der Ansprüche 1 - 7 an den Rücklauf (16) der Kraftstoffeinspritzventileinrichtung (15) und an den Niederdruckbereich angeschlossen ist.

## Claims

1. Pressure-maintaining valve for a fuel injection system, which pressure-maintaining valve comprises a high-pressure region and a low-pressure region, having a valve housing (20) which has a first port (23), which can be connected to the low-pressure region, and a second port (24), which can be connected to the return line (16) of a fuel injection valve device (15), with a valve pot (25) being held in the valve housing (20) so as to be movable in a reciprocating fashion, which valve pot (25) is preloaded counter to the preload force of a first spring device (29) and has a passage opening (31) which can be closed off by means of a closing element (32) which is preloaded counter to the preload force of a second spring device (33) in order to maintain a minimum pressure in the return line (16), **characterized in that** a pressure release device (35, 36, 37) is arranged in the valve housing (20) between the first port (23) and the valve pot (25), which pressure release device (35, 36, 37) can be actuated from the outside.

2. Pressure-maintaining valve according to Claim 1, **characterized in that** the pressure release device comprises a pressure stud (35) which projects from the first port (23) to the valve pot (25).

3. Pressure-maintaining valve according to Claim 2,
**characterized in that** the pressure stud (35) projects from a positioning disc (36) which is braced between the second spring device (33) and the valve housing (22).

4. Pressure-maintaining valve according to Claim 3, **characterized in that** a fixing disc (37) is arranged between the positioning disc (36) and the valve housing (22), which fixing disc (37) serves to fix a filter element (38) between the positioning disc (36) and the fixing disc (37).

5. Pressure-maintaining valve according to Claim 4, **characterized in that** passage holes (41 to 44; 51 to 56) are provided in the fixing disc (37) and in the positioning disc (36).

6. Pressure-maintaining valve according to Claim 5, **characterized in that** the passage holes (41 to 44; 51 to 56) in the fixing disc (37) and in the positioning disc (36) are formed and arranged such that a passage of fuel through the fixing disc (37) and through the positioning disc (36) is ensured independently of a relative rotation of the two discs with respect to one another.

7. Pressure-maintaining valve according to one of Claims 4 to 6, **characterized in that** the fixing disc (37) has an annular bead (39) radially at the outside on the side facing away from the positioning disc (36).

8. Tool for dissipating the pressure in a pressure-maintaining valve (18) according to one of the preceding claims, **characterized in that** the tool (70) has a cup-shaped basic body (72) with a base (73) from which projects a substantially round cylindrical-casing-shaped circumferential wall whose inner diameter is slightly greater than the outer circumference of the pressure-maintaining valve (18) in the region of the first port (23).

9. Tool according to Claim 8, **characterized in that** a pin (75) extends in the interior of the tool (70) from the base (73) in the direction of the tool longitudinal axis (74), the outer diameter of which pin (75) is slightly smaller than the inner diameter of the first port (23) and the length of which pin (75) is greater than the length of the first port.

10. Set having a pressure-maintaining valve (18) according to one of Claims 1 to 7 and a tool (70) according to one of Claims 8 to 9.

11. Fuel injection system which comprises a low-pressure region and a high-pressure region which feeds a fuel injection valve device (15) which is connected via a return line (16) to the low-pressure region, **characterized in that** a pressure-maintaining valve (18) according to one of Claims 1-7 is connected to the return line (16) of the fuel injection valve device (15) and to the low-pressure region.

## Revendications

1. Soupape de maintien de pression pour un système d'injection de carburant, qui comprend une région haute pression et une région basse pression, avec un boîtier de soupape (20) qui présente un premier raccord (23) qui peut être connecté à la région basse pression, et un deuxième raccord (24) qui peut être connecté au retour (16) d'un dispositif de soupape d'injection de carburant (15), un pot de soupape (25) étant reçu de manière déplaçable d'avant en arrière dans le boîtier de soupape (20), et étant précontraint à l'encontre de la force de précontrainte d'un premier dispositif de ressort (29), et présentant une ouverture de passage (31) qui peut être fermée par un élément de fermeture (32) qui est précontraint à l'encontre de la force de précontrainte d'un deuxième dispositif de ressort (33) afin de maintenir une pression minimale dans le retour (16), **caractérisée en ce qu'**un dispositif de décharge (35, 36, 37) est disposé dans le boîtier de soupape (20) entre le premier raccord (23) et le pot de soupape (25), lequel peut être actionné depuis l'extérieur.

2. Soupape de maintien de pression selon la revendication 1, **caractérisée en ce que** le dispositif de décharge comprend un boulon de pression (35) qui s'étend depuis le premier raccord (23) jusqu'au pot de soupape (25).

3. Soupape de maintien de pression selon la revendication 2, **caractérisée en ce que** le boulon de pression (35) part d'une rondelle de positionnement (36) qui est serrée entre le deuxième dispositif de ressort (33) et le boîtier de soupape (22).

4. Soupape de maintien de pression selon la revendication 3, **caractérisée en ce qu'**une rondelle de fixation (37) est disposée entre la rondelle de positionnement (36) et le boîtier de soupape (22), qui sert à fixer un élément de filtration (38) entre la rondelle de positionnement (36) et la rondelle de fixation (37).

5. Soupape de maintien de pression selon la revendication 4, **caractérisée en ce que** l'on prévoit dans la rondelle de fixation (37) et dans la rondelle de positionnement (36) des trous de passage (41 à 44 ; 51 à 56).

6. Soupape de maintien de pression selon la revendication 5, **caractérisée en ce que** les trous de passage (41 à 44 ; 51 à 56) sont conçus et disposés dans la rondelle de fixation (37) et dans la rondelle de positionnement (36) de telle sorte qu'un passage de carburant à travers la rondelle de fixation (37) et à travers la rondelle de positionnement (36) soit assuré indépendamment d'une rotation relative des deux rondelles l'une par rapport à l'autre.

7. Soupape de maintien de pression selon l'une quelconque des revendications 4 à 6, **caractérisée en ce que** la rondelle de fixation (37) présente, du côté opposé à la rondelle de positionnement (36), un bourrelet annulaire (39) s'étendant radialement à l'extérieur.

8. Outil pour réduire la pression dans une soupape de maintien de pression (18) selon l'une quelconque des revendications précédentes, **caractérisé en ce que** l'outil (70) présente un corps de base (72) en forme de coupe, avec un fond (73), duquel part une paroi périphérique essentiellement en forme d'enveloppe cylindrique circulaire, dont le diamètre intérieur est un peu plus grand que la périphérie extérieure de la soupape de maintien de pression (18) dans la région du premier raccord (23).

9. Outil selon la revendication 8, **caractérisé en ce qu'**un mandrin (75) s'étend à l'intérieur de l'outil (70) depuis le fond (73) dans la direction de l'axe longitudinal de l'outil (74), son diamètre extérieur étant un peu plus petit que le diamètre intérieur du premier raccord (23) et sa longueur étant plus grande que la longueur du premier raccord.

10. Ensemble comprenant une soupape de maintien de pression (18) selon l'une quelconque des revendications 1 à 7, et un outil (70) selon l'une quelconque des revendications 8 à 9.

11. Système d'injection de carburant qui comprend une région basse pression et une région haute pression, depuis laquelle un dispositif de soupape d'injection de carburant (15) est alimenté et qui est connecté par le biais d'un retour (16) à la région basse pression, **caractérisé en ce qu'**une soupape de maintien de pression (18) selon l'une quelconque des revendications 1 à 7 est raccordée au retour (16) du dispositif de soupape d'injection de carburant (15) et à la région basse pression.
